# EUROPÄISCHE PATENTSCHRIFT

(11) **EP 4 034 845 B1**
(45) Veröffentlichungstag und Bekanntmachung des Hinweises auf die Patenterteilung: **10.07.2024**
(21) Anmeldenummer: 20760450.5
(22) Anmeldetag: 20.08.2020
(51) Int. Cl.: G01F 1/58, G01F 15/14

(54) **MAGNETISCH-INDUKTIVES DURCHFLUSSMESSGERÄT**
MAGNETO-INDUCTIVE FLOWMETER
DÉBITMÈTRE MAGNÉTO-INDUCTIF

(30) Priorität: 26.09.2019 DE 102019126013
(43) Veröffentlichungstag der Anmeldung: 03.08.2022
(73) Patentinhaber: Endress + Hauser Flowtec AG, 4153 Reinach (CH)
(72) Erfinder: VOIGT, Frank, 79576 Weil am Rhein (DE); ZIEGLER, Steffen, 79650 Schopfheim (DE)
(74) Vertreter: Hahn, Christian
(86) Internationale Anmeldenummer: PCT/EP2020/073415
(87) Internationale Veröffentlichungsnummer: WO 2021/058209

(56) Entgegenhaltungen:
- DE-A1- 102011 079 352
- DE-B- 1 303 740
- DE-U1- 202014 103 426
- GB-A- 2 169 079
- US-A- 3 945 250

## Beschreibung

Magnetisch-induktive Durchflussmessgeräte werden zur Bestimmung der Durchflussgeschwindigkeit und des Volumendurchflusses eines fließenden Mediums in einer Rohrleitung eingesetzt (siehe DE 13 03 740 B). Ein magnetisch-induktives Durchflussmessgerät weist ein Magnetsystem auf, das ein Magnetfeld senkrecht zur Flussrichtung des fließenden Mediums erzeugt (siehe DE 10 2011 079 352 A1). Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U der Durchflussmesswert bestimmt werden, welcher abhängig von der Anwendung die Durchflussgeschwindigkeit u, mit Hinzunahme eines bekannten Rohrquerschnitts, der Volumendurchfluss *V̇* oder, mit Hinzunahme der Mediumsdichte, den Massedurchfluss *ṁ* umfasst.

Es sind bereits magnetisch-induktive Durchflussmessgeräte bekannt, die austauschbare Messrohre verwenden. Ein solches magnetisch-induktives Durchflussmessgerät wird beispielsweise in der DE 10 2016 118 064 A1 gelehrt.

Die DE 10 2010 031 433 A1 lehrt einen austauschbaren, teilweise u-förmigen Einweg-Einsatz mit mindestens drei Messelektroden, der dazu ausgebildet ist in das Messrohr eines herkömmlichen magnetisch-induktiven Durchflussmessgerätes eingesetzt zu werden. Zwei der mindestens drei Messelektroden werden über die im Messrohr angebrachten Messelektroden kontaktiert und mit der Messschaltung verbunden. Das durch das Magnetsystem des magnetisch-induktiven Durchflussmessgerätes erzeugte Magnetfeld dringt durch das Messrohr und durch die Wandung des Einweg-Einsatzes und erzeugt in dem durch den Einweg-Einsatz fließenden Medium eine Ladungstrennung, welche als Messspannung mittels der mindestens drei Messelektroden abgegriffen wird. Nachteilig an dieser Erfindung jedoch ist, dass die Montage des Einweg-Einsatzes in das Messrohr gerade bei Reinraumbedingungen sehr umständlich ist.

US 3 945 250 A lehrt ein magnetisch-induktives Durchflussmessgerät zum Bestimmen der Durchflussgeschwindigkeit von Blut durch Venen und Arterien. Das magnetisch-induktive Durchflussmessgerät weist einen starren ersten Gehäuseteil und einen linear beweglichen zweiten Gehäuseteil auf, der über eine Schraube in einer Stellung fixierbar ist. Die Messelektroden selbst sind ebenfalls star im ersten Gehäuseteil angeordnet. Der Erfindung liegt die Aufgabe zugrunde ein magnetisch-induktives Durchflussmessgerät bereitzustellen, das bei Reinraumbedingungen ein einfaches Austauschen des Messrohres bzw. ein einfaches Einführen des Messrohres in das Messsystem ermöglicht.

Die Aufgabe wird gelöst durch das magnetisch-induktive Durchflussmessgerät nach Anspruch 1.

Das erfindungsgemäße magnetisch-induktive Durchflussmessgerät, umfasst:
- ein Gehäuse;
- ein auswechselbares Messrohr zum Führen eines fließfähigem Mediums;
- mindestens zwei Messelektroden, welche im Messrohr angebracht sind,
   wobei die Messelektroden jeweils einen Frontbereich aufweisen zum Bilden eines galvanischen Kontaktes mit dem Medium;
- eine magnetfelderzeugende Vorrichtung zum Erzeugen eines das Messrohr durchsetzenden Magnetfeldes,
   wobei die magnetfelderzeugende Vorrichtung eine erste Spule und eine zweite Spule umfasst,
   wobei die erste Spule einen ersten Spulenkern umgreift,
   wobei die zweite Spule einen zweiten Spulenkern umgreift;
- mindestens zwei Anschlusskontakte jeweils mit einer Messschaltung elektrisch verbunden sind, welche bevorzugt im Gehäuse angeordnet ist;
   wobei das Gehäuse zweiteilig ausgebildet ist und einen ersten Gehäuseteil und einen zweiten Gehäuseteil aufweist,
   wobei die erste Spule und der erste Spulenkern im ersten Gehäuseteil angeordnet sind,
   wobei die zweite Spule und der zweite Spulenkern im zweiten Gehäuseteil angeordnet sind,
   wobei das Messrohr zwischen dem ersten und zweiten Gehäuseteil formund/oder kraftschlüssig angeordnet ist und
   wobei der erste Gehäuseteil und der zweite Gehäuseteil über ein Führungselement miteinander verbunden sind,
   wobei der Abstand zwischen den beiden Gehäuseteilen über das Führungselement linear verstellbar ist,
   wobei die Gehäuseteile jeweils mindestens eine Fläche aufweisen, die einer Fläche des jeweilig anderen Gehäuseteils zugewandt ist,
   dadurch gekennzeichnet, dass die Anschlusskontakte an dieser Fläche angeordnet sind und aus der Fläche hervorstehen,
   wobei die Anschlusskontakte federnd ausgebildet sind.

Bisher musste ein austauschbares Messrohr in eine Aufnahme eingeschoben werden, die entweder als u-förmige Aufnahme bzw. Öffnung im Gehäuse oder aber als Messrohr-Eingang eines herkömmlichen Durchflussmessgerätes realisiert wurde. Für eine einfachere Montage des Messrohres ließ sich die Aufnahme bzw. Öffnung nachträglich nicht mehr erweitern.

Durch die zweiteilige Ausgestaltung des Gehäuses und die Verbindung der beiden Teile mit dem Führungselement lässt sich eine einfach zu handhabende Lösung realisieren. Bevor das Messrohr eingesetzt wird, kann der Abstand zwischen den beiden Teilen des Gehäuses erhöht werden, so dass die durch die beiden Gehäuseteile gebildetet Öffnung erweitert wird und das Messrohr problemlos eingesetzt werden kann. Nachdem das Messrohr eingesetzt ist, lässt sich der Abstand der beiden Gehäuseteile wieder über das Führungselement reduzieren, so dass das Messrohr zwischen dem ersten und zweiten Gehäuseteil form- und/oder kraftschlüssig angeordnet ist.

In der mechanischen Technik verwendete Führungselemente ermöglichen, dass ein Körper oder ein Punkt eines Körpers auf einer vorgegebenen Bahn geführt wird. Für die vorliegende Anwendung ist es besonders vorteilhaft, wenn das Führungselement eine lineare Bewegung mindestens eines Gehäuseteils ermöglicht. Dafür eignen sich Linearführungen oder Geradführungen. Beispiele für lineare Positionier- und Handhabungssysteme sind Einachssystem, Zweiachssysteme, Mehrachssysteme oder elektromechanische Zylinder. Weiterhin umfasst ein Führungselement auch Antriebseinheiten, wie Linearmotoren, Pneumatikzylinder und Hydraulikzylinder.

Das Verstellen des Abstandes der beiden Gehäuseteile kann dadurch realisiert werden, dass sich beide Gehäuseteile jeweils entlang des Führungselementes linear aufeinander zu- oder voneinander wegbewegen. Es ist besonders vorteilhaft, wenn eines der beiden Gehäuseteile fixiert und bloß das jeweils andere Gehäuseteil linear verstellbar ist.

Führungselemente weisen einen Führungskörper auf. Dieser kann als Führungsschiene, insbesondere Rundschiene oder als Wälzführung, insbesondere als Profilschienenführung oder als Käfigschienenführung ausgebildet sein.

In herkömmlichen Messrohren sind die Messelektroden diametral angeordnet und über Kontaktkörper, z.B. Kabel mit einer Messschaltung verbunden. Die Kabel verlaufen entlang der Außenwandung des Messrohres zum Spulenkern, wo sie sich zwischen Spulenkern und Spulenhülse entlang bis zum Endbereich des Spulenkern erstrecken (siehe dazu DE 20 2014 103 426 U1). Dabei ist die gesamte Anordnung der Kabel möglichst symmetrisch zu einer Längsebene des Messrohres, die durch die beiden Spulen verläuft. Vom Ende des Spulenkerns aus verlaufen die Kabel bis zur Messschaltung. Es ist jedoch umständlich bei auswechselbaren Messrohren die Verkabelung der Messelektroden immer wieder neu durchzuführen. Es ist daher vorteilhaft, wenn im Gehäuse Anschlusskontakte vorgesehen sind, die selbst mit der Messschaltung elektrisch verbunden sind und die im eingebauten Zustand des Messrohres einen elektrischen Kontakt zu den Messelektroden im Messrohr aufweisen.

Dadurch, dass die Anschlusskontakte federnd ausgebildet sind lässt sich eine Abnutzung des Kontaktes beim Wiederholten Ein- und Ausbauen des austauschbaren Messrohres minimieren.

Vorteilhafte Ausgestaltungen der Erfindung sind Gegenstand der Unteransprüche.

Eine Ausgestaltung sieht vor, dass das Führungselement aus mindestens einem insbesondere zumindest teilweise zylindrisch ausgebildeten Führungskörper und einer Feder, insbesondere einer Schraubenfeder gebildet ist,
wobei die insbesondere als Zug- oder Druckfeder ausgebildete Feder so am Führungskörper angeordnet ist, dass die Feder eines der beiden Gehäuseteile gegen das jeweils andere Gehäuseteil drückt oder beide Gehäuseteile zusammenzieht.

Es ist vorteilhaft, wenn das Führungselement mindestens eine Feder aufweist, welche die beiden Gehäuseteile zusammendrückt oder -zieht. Es handelt sich dabei um eine Druckoder Zugfeder. Beim Montieren des Messrohres wird ein Gehäuseteil entlang des Führungskörpers bewegt, so dass sich die Feder zusammendrückt oder auseinanderzieht. Damit dies geschieht und damit das bewegte Gehäuseteil in Position bleibt muss Kraft aufgewendet werden. Diese Kraft kann beispielsweise durch den Monteur oder mit Hilfe einer Antriebseinheit aufgebracht werden.

Liegt das Messrohr in der Einbauposition, so kann die wirkende Kraft reduziert werden, was dazu führt, dass die Feder die beiden Gehäuseteile wieder zusammenbringt, so dass das Messrohr kraftschlüssig zwischen den beiden Gehäuseteilen fixiert ist.

Eine Realisierung des Führungselementes aus einem Führungskörper und einer Feder ist besonders für Anwendungen im Reinraumbereich interessant, da dadurch Verunreinigungen, die durch Abrieb oder durch Hydrauliköl entstehen vermieden werden.
Eine Ausgestaltung sieht vor, dass ein erster Rückführkörper im ersten Gehäuseteil angeordnet ist,
wobei ein zweiter Rückführkörper im zweiten Gehäuseteil angeordnet ist,
wobei die Rückführkörper jeweils zwei Schenkel und eine Basis aufweisen,
wobei die Basis den jeweiligen Spulenkern endseitig abdeckt,
wobei die Schenkel sich seitlich der jeweiligen Spule erstrecken und zum Messrohr geneigt sind.

Rückführkörper dienen dazu, die Magnetfeldlinien, welche aus dem Spulenkern treten, jedoch das Messrohr nicht oder nur teilweise schneiden, zu sammeln und möglichst verlustfrei zum entgegengesetzten Pol zu führen. Daher berühren die Rückführkörper idealerweise beide Spulenkerne jeweils an den dem Messrohr abgewandten Seiten. Die Rückführkörper sind üblicherweise durch eine Mehrzahl an miteinander verbundenen Blechen gebildet, die vorzugsweise durch Stanzpaketieren hergestellt sind. Es sind aber Rückführkörper bekannt, welche aus einem einzelnen Blechteil bzw. aus einlagigen Blechteilen gebildet sind.

Üblicherweise sind die Rückführkörper im montierten Zustand so ausgebildet, dass sie das Messrohr im Querschnitt eines Teilbereiches des Messrohres vollständig umschließen. In der Regel ist der Rückführkörper zweiteilig ausgebildet, wobei sich die beiden Teile überlappen und miteinander verbunden sind. Mittels einer Schraube oder einem Rastverschluss werden die beiden Rückführkörper miteinander befestigt und somit der Kontakt sichergestellt.

Erfindungsgemäß weisen die Rückführkörper eine Basis und zwei Schenkel auf. Idealerweise bildet sich dadurch eine u-Form aus. Eine ähnliche Form ist aus der DE 10 2011 079 352 A1 bekannt. Ein Rückführkörper kann einteilig oder auch mehrteilig, insbesondere zweiteilig ausgebildet sein. In dem Fall besteht ein Rückführkörper aus zwei L-förmige Teile, die zusammengenommen im Wesentlichen eine U-Form bilden. Zwei Rückführkörper bilden eine Rückführungsanordnung. Zum einen können sich die beiden Rückführkörper im geschlossenen Zustand des Durchflussmessgerätes berühren. Dafür sind Öffnungen im Gehäuse notwendig, durch welche sich zumindest eines der Rückführungskörper erstreckt. Jedoch kann anwendungsbedingt auf einen Kontakt zwischen den beiden Rückführungskörpern verzichtet werden. In dem Fall sind die jeweiligen Rückführungskörper durch die Wandungen der beiden Gehäuseteile getrennt.

Eine Ausgestaltung sieht vor, dass ein insbesondere am Gehäuse angebrachtes Verschlusselement dazu ausgebildet ist, den ersten Rückführkörper mit dem zweiten Rückführkörper zu verbinden,
wobei das Verschlusselement als schwenkbare Klappe oder als linear verschiebbares Blechteil realisiert ist.

Es ist vorteilhaft, wenn zusätzlich zur Feder, die für eine kraftschlüssige Verbindung des Messrohres zwischen den beiden Gehäuseteilen sorgt, auch ein Verschlusselement man Gehäuse angeordnet ist, mit dem eine zusätzliche Fixierung realisiert wird. Besonders bei Anwendungen in denen flexible Schlauch- und/oder Kunststoffrohrsysteme verwendet werden besteht die Gefahr, dass die Messwerte verfälscht werden, wenn über das Rohrsystem übertragene Kräfte die Feder auseinanderzieht oder zusammenstaucht und somit das Messrohr in seiner Einbauposition verstellt, was zu einem Verlust des elektrischen Kontaktes zwischen den Anschlusskontakten und Messelektroden führt.

Das Verschlusselement umfasst vorzugsweise mindestens ein Drehgelenk, einen Verschlussriegel und eine Verschlussklappe auf. Die Verschlussklappe ist mit dem Drehgelenk beweglich verbunden und rotiert um eine durch das Drehgelenkt definierte Rotationsachse. Das Drehgelenk ist an einem der beiden Teile des Gehäuses angebracht. Der Verschlussriegel am jeweils anderen Gehäuseteil. Beim Schließen des Verschlusselementes wird die Verschlussklappe um das Drehgelenk rotiert, bis der Verschlussriegel in eine in der Verschlussklappe eingebrachte Ausformung festsitzt. In dem Zustand lassen sich die beiden Gehäuseteile nicht auseinanderbringen. Das Messrohr lässt sich nicht mehr aus seiner Einbauposition entnehmen, ohne zuvor das Verschlusselement wieder zu öffnen.

Es ist besonders vorteilhaft, wenn das Verschlusselement nicht nur für eine Fixierung des Messrohres zwischen den Gehäuseteilen sorgt, sondern im geschlossenen Zustand auch eine Verbindung zwischen den beiden Rückführkörpern herstellt. Dies kann beispielsweise mit Hilfe des Drehgelenkes und des Verschlussriegels erfolgen, welche beide in Kontakt mit einem der beiden Rückführkörper stehen. Wird die Verschlussklappe geschlossen, bildet sich über die Verschlusseinheit ein geschlossener Kontakt zwischen den beiden Rückführkörpern. Besteht die Verschlusseinheit aus einem ferromagnetischen Material, so ist sie zusätzlich dazu ausgebildet das Magnetfeld vom ersten Rückführkörper zum zweiten Rückführkörper und andersherum zu führen.

Alternativ kann das Verbinden der beiden Rückführkörper auch über ein linear verschiebbares Blechteil erfolgen, das an einem der beiden Gehäuseteile angebracht ist. Bevor das Messrohr durch die Öffnung geführt wird, wird das Blechteil verschoben. Befindet sich das Messrohr in der Einbauposition, so wird das Blechteil wieder entlang der Öffnung verschoben, bis es beide Rückführkörpern kontaktiert.

Eine Ausgestaltung sieht vor, dass im ersten Gehäuseteil eine erste Steckverbindung angeordnet ist, die mit einer Betriebsschaltung elektrisch verbunden ist,
wobei im zweiten Gehäuseteil eine zweite Steckverbindung angeordnet ist, die komplementär zur ersten Steckverbindung ausgebildet ist und die mit der zweiten Spule elektrisch verbunden ist
wobei in einem geschlossenen Zustand des magnetisch-induktiven Durchflussmessgerätes eine elektrische Verbindung zwischen dem ersten und dem zweiten Steckverbinder hergestellt ist.

Dadurch dass das Gehäuse zweiteilig ausgebildet ist, entsteht das Problem der elektrischen Verbindung der einzelnen Spulen mit der Betriebsschaltung, welche dazu eingerichtet ist die Spulen mit Strom zu versorgen. Es ist daher vorteilhaft, wenn beide Gehäuseteile Steckverbindungen aufweisen, die komplementär zueinander ausgebildet sind, so dass im geschlossenen Zustand eine elektrisches Verbindung zwischen der Betriebsschaltung und den einzelnen Spulen realisiert wird.

Ist die Betriebsschaltung im ersten Gehäuseteil angeordnet, so ist das elektrische Verbinden der Betriebsschaltung mit der ersten Spule unkritisch. Es besteht die Möglichkeit in beiden Gehäuseteilen jeweils eine Öffnung vorzusehen, durch die beispielsweise ein Kabel verläuft zur Versorgung der zweiten Spule. Da aber die beiden Gehäuseteile über das lineare Führungselement beweglich bzw. teilweise beweglich ausgebildet sind, kann es schnell zur Beschädigung des Kabels kommen.

Es ist daher vorteilhaft, dass die beiden Gehäuseteile komplementär ausgebildete Steckverbindungen aufweisen. Somit wird vermieden, dass Kabel außerhalb des Gehäuses verlaufen und zusätzlich sichergestellt, dass das Messgerät nur dann betrieben wird, wenn es sich auch im geschlossenen Zustand befindet.

Die Betriebsschaltung muss nicht im ersten Gehäuseteil angeordnet sein, sondern kann sich auch außerhalb des Gehäuses befinden und über einen Steckverbinder, der in einem der beiden Gehäuseteile angeordnet ist mit der dort befindlichen Spule verbunden sein.

Messschaltungen im Bereich der Durchflussmesstechnik sind hinlänglich bekannt. Die Aufgabe der Messschaltung ist es sehr kleine Absolutwerte und Änderungen der jeweiligen Messgröße zu detektieren. Es gibt eine Vielzahl an unterschiedlichen Ausgestaltungen, die jeweils ihre Vor- und Nachteile haben.

Zum einen kann die Messschaltung dazu eingerichtet sein, ein Potential an einer der Messelektrode in Bezug auf ein Referenzpotential abzugreifen. Somit kann selbst dann, wenn eine der zwei Messelektroden ausfällt, weiterhin die Durchflussgeschwindigkeit anhand eines ermittelten Potentials bestimmt werden. Als Referenzpotential eignet sich das Gehäusepotential oder ein Erdpotential. Die magnetisch-induktive Durchflussmesssonde kann eine Erdungselektrode aufweisen, die mit dem Referenzpotential verbunden ist. Die beiden Messgrößen können demnach die an zwei Messelektroden jeweils vorherrschenden und ermittelten elektrischen Potentiale sein.

Zum anderen kann die Messschaltung so ausgebildet sein, dass sie eine zwischen zwei Messelektroden vorherrschende Potentialdifferenz detektiert und aufnimmt.

Eine Messschaltung umfasst daher einen Analog/Digital-Wandler, der die eingehende Signale, in dem Fall die aktuell an dem jeweiligen Messelektrodenpaar anliegende Potentialdifferenz oder das an der jeweiligen Messelektrode vorherrschende elektrische Potential, in digitale Daten umwandelt, die dann durch eine Auswerteschaltung weiterverarbeitet oder gespeichert werden. Es sind aber auch andere Messumsetzer oder Messumformer der Digitalen Messtechnik bekannt und geeignet zum Detektieren einer Messspannung oder eines elektrischen Potentials.

Die Auswerteschaltung ist dazu eingerichtet, die durch die Messschaltung gemessenen Messwerte der jeweiligen Messgrößen zu verarbeiten und die gesuchte Messgröße ermitteln. Eine Auswerteschaltung umfasst daher üblicherweise Mikroprozessoren, Verstärker und Rauschfilter. Die Mess- und Auswerteschaltung können modular ausgebildet sein und mittels einer drahtlosen Verbindung kommunizieren, oder Teil einer einzelnen Mess- und Auswerteelektronik sein, die in einem Gehäuse der Durchflussmesssonde angeordnet ist.

Eine Ausgestaltung sieht vor, dass die Messelektroden auf gegenüberliegenden Seiten des Messrohres angeordnet sind,
wobei die Messelektroden stiftförmig ausgebildet sind und eine Vertiefung an jeweiligen Enden aufweisen, die als Aufnahme für die Anschlusskontakte ausgebildet sind.

In herkömmlichen Messrohren sind die Messelektroden diametral angeordnet. Die Frontfläche der Messelektroden sind üblicherweise dazu ausgebildet einen galvanischen Kontakt mit dem fließenden Medium zu bilden. Es sind jedoch auch Messrohre bekannt, die Messelektroden aufweisen, deren Seitenflächen im galvanischen Kontakt mit dem Medium stehen.

Es ist besonders vorteilhaft, wenn die Enden der Messelektroden Vertiefungen aufweisen, die komplementär zu den federnden Anschlusskontakten ausgebildet sind. Dadurch lässt sich eine ausreichende Kontaktierung der Messelektroden gewährleisten. Die federnd ausgebildeten Anschlusskontakte werden beim Einführen des Messrohres zuerst verdrängt und rasten dann in die Aufnahme ein.

Eine Ausgestaltung sieht vor, dass die Messelektroden in einer Querschnittsebene des Messrohres angebracht sind,
wobei eine Erdungselektrode zum Bilden eines galvanischen Kontaktes mit dem Medium zur Querschnittsebene beabstanden im Messrohr angebracht ist,
wobei ein Anschlusskontakt mit einem Referenzpotential, insbesondere mit einem Erdpotential elektrisch zu verbinden, im ersten oder im zweiten Gehäuseteil angeordnet ist.

Durchflussmessgeräte, die elektrisch isolierend ausgebildete Messrohre aufweisen, benötigen ein ausreichende Erdung in Form eines Erdungsringes oder einer Erdungselektrode. Für eine kompaktere Bauweise der magnetisch-induktiven Durchflussmessgerätes ist es vorteilhaft, wenn die Erdungselektrode versetzt zur die Messelektrode schneidenden Querschnittsebene eingerichtet ist, da sich so die magnetfelderzeugende Vorrichtung und die Anschlusskontakte für die Erdungselektrode nicht behindern. Vorzugsweise ist die Querschnittsebene, welche die Erdungselektrode schneidet in Fließrichtung nach der Querschnittsebene angeordnet, in welcher die Messelektroden angebracht sind. Die versetzte Anordnung der Erdungselektrode ist auch Teil eines Poko Yoke Systems und vermeidet so ein fehlerhaftes Montieren des Messrohres in das magnetisch-induktive Durchflussmessgerät.

Eine Ausgestaltung sieht vor, dass mindestens ein Gehäuseteil eine Frontfläche aufweist,
wobei ein Normalenvektor der Frontfläche aus einem Vektor parallel zur Längsachse des Führungselementes und einem Vektor parallel zu einer zwei Messelektroden verbindenden Querachse des Messrohres zusammengesetzt ist,
wobei die Frontfläche dazu ausgebildet ist beim Einführen des Messrohres Kraft, die dabei auf die Frontfläche wirkt, in eine Linearbewegung eines Gehäuseteils weg vom jeweils anderen Gehäuseteil umzuformen.

Es ist besonders vorteilhaft, wenn das Gehäuse im Frontbereich des Gehäuses eine Frontfläche aufweist, dessen Lot so bezüglich der Einführrichtung des Messrohres geneigt ist, dass beim Einführen des Messrohr zwischen die beiden Gehäuseteile und dem Andrücken des Messrohres gegen die Frontfläche, die in die Einführrichtung wirkende Kraft umgelenkt wird in eine Kraft parallel zur Längsrichtung des linearen Führungselementes. Das bewirkt, dass die Feder durch das Andrücken des Messrohres an die Frontfläche auseinanderdrückt oder zusammenstaucht wird und somit der Abstand der beiden Gehäuseteile zunimmt. Der Abstand nimmt solange zu, bis das Messrohr die Einbauposition erreicht hat. Der Abstand nimmt danach wieder ab und das Messrohr ist nicht nur form- sondern auch kraftschlüssig zwischen den beiden Gehäuseteilen angebracht. Dies vereinfacht das Einführen des Messrohres, so dass die Gehäuseteile vor dem Einführen des Messrohre nicht erst auseinandergezogen werden müssen. Ein Andrücken des Messrohres gegen die Frontfläche ist ausreichend.

Eine Ausgestaltung sieht vor, dass die Messelektroden jeweils einen insbesondere L-förmig ausgebildeten Messelektrodenkörper aufweisen.

Durch den L-förmigen Messelektrodenkörper wird sichergestellt, dass sich die Kontaktstellen zwischen Messelektrode und Anschlusskontakten nahe am Gehäuse befindet. Dadurch wird verhindert, dass die Anschlusskontakte das Einführen des Messrohres behindern.

Der Messrohrkörper des Messrohres wird vorzugsweise mittels eines Urformverfahrens, insbesondere mittels Spritzgießens einstückig hergestellt. Im gleichen Verfahren lassen sich auch die Messelektroden im Messrohr anordnen und mit dem Material des Messrohrkörpers umspritzen. Es ist daher vorteilhaft, wenn die Messelektroden auch einstückig ausgebildet sind, da dadurch Herstellungsschritte eingespart werden können.

Eine Ausgestaltung sieht vor, dass der Messelektrodenkörper aus zwei Teilen gebildet ist,
wobei ein Endbereich des ersten Teils komplementär zum Frontbereich des zweiten Teils gebildet ist,
wobei der zweite Teil formschlüssig mit dem ersten Teil verbunden ist.

Es wird zwar ein zusätzlicher Montageschritt benötigt, bei dem das zweite Teil des Messelektrodenkörpers in eine vorgesehene Aufnahme im Messrohrkörper eingesetzt wird, jedoch muss der Messelektrodenkörper nicht erst durch ein Umformverfahren, insbesondere durch ein Biegeverfahren in eine L-Form umgeformt werden. Dies kann besonders bei Messelektroden mit geringem Querschnitt zu defekten führen.

Eine Ausgestaltung sieht vor, dass das Messrohr mindestens zwei Führungsscheiben aufweist die als Positioniervorrichtung dienen,
wobei die Führungsscheiben jeweils eine Kontaktfläche aufweisen,
wobei die Führungsscheiben so ans Messrohr angebracht sind, dass die Kontaktflächen einander zugewandt sind,
wobei die Führungsscheiben beabstanden sind und die Kontaktflächen im Kontakt mit dem Gehäuse stehen.

Die Führungsscheiben stellen sicher, dass das Messrohr passgenau in die vorgesehene Montageposition eingesetzt wird und dass sich die Messelektroden und die Anschlusskontakte in einer gemeinsamen Ebene befinden, wodurch eine fehlerhafte Kontaktierung vermieden wird. Des Weiteren wird ein Verschieben des Messrohres in Längsrichtung unterbunden.

Weitere Strukturen im Messrohrkörper stellen ausgehend von dem Poka Yoke Prinzip sicher, dass nur eine Einbaumöglichkeit für das Messrohr existiert, so dass immer sichergestellt ist, dass die Messelektroden und die Erdungselektrode durch die Anschlusskontakte kontaktiert werden.

Eine Ausgestaltung sieht vor, dass die magnetfelderzeugende Vorrichtung, insbesondere Polschuhe der magnetfelderzeugende Vorrichtung durch eine Wandung des Gehäuses von dem Messrohr getrennt ist.

Eine Ausgestaltung sieht vor, dass das erste und das zweite Gehäuseteil jeweils eine Öffnung aufweisen,
wobei sich ein Schenkel des ersten und/oder des zweiten Rückführkörpers durch die jeweilige Öffnung erstrecken,
wobei sich in einem geschlossenen Zustand des magnetisch-induktiven Durchflussmessgerätes ein Kontakt zwischen dem ersten und dem zweiten Rückführkörper ergibt.

Übliche Durchflussmessgeräte mit austauschbaren Messrohren weisen stark vereinfachte Magnetsysteme auf. Dadurch liegt der Messfehler auch bei einzelne Prozente. Es ist somit besonders vorteilhaft, wenn die beiden Rückführkörper miteinander verbunden sind, da dadurch Streufelder reduziert werden können.

Es ist daher besonders vorteilhaft, wenn in den beiden Gehäuseteilen Öffnungen eingebracht sind, durch die sich die Rückführkörper erstrecken. Im geöffneten Zustand berühren sich die Rückführkörper nicht und das Messrohr lässt sich zwischen die beiden Gehäuseteile einführen. Im geschlossenen Zustand berühren sich die beiden Rückführkörper und der Pfad der Magnetfeldlinien entlang des Rückführungskörpers ist wieder geschlossen.

Eine Ausgestaltung sieht vor, dass das Messrohr aus einem isolierenden Werkstoff, insbesondere einem Kunststoff und bevorzugt Polyetheretherketone (PEEK), Polyaryletherketone (PAEK), Polyphenylsulfone (PPSU), Polyethersulfone (PESU), Polysulfone (PSU), Polyarylamide (PARA), Glas und/oder Keramik gefertigt ist.

Es existiert eine Nachfrage an Durchflussmessgeräten mit Einweg-Messrohren für biopharmazeutische Anwendungen. Dafür müssen die Materialien, die in Kontakt mit dem Medium kommen biokompatibel und gammasterilisierbar sein. Es ist daher besonders vorteilhaft, wenn das Messrohr aus einem der oben genannten Materialien hergestellt ist, da diese die biopharmazeutischen Anforderungen erfüllen.

Die Erfindung wird anhand der nachfolgenden Figuren näher erläutert. Es zeigt:
Fig. 1: einen Querschnitt der Messanordnung zum Messrohr;
Fig. 2: einen Längsschnitt der Messanordnung zum Messrohr;
Fig. 3: einen Längsschnitt des Gehäuses;
Fig. 4: eine perspektivische Ansicht der Messanordnung Gehäuses mit eingesetzten Messrohr;
Fig. 5: eine perspektivische Ansicht der Messanordnung mit einem Verschlusselement im offenen und geschlossenen Zustand;
Fig. 6: eine perspektivische Ansicht der Messanordnung mit einem Exzenterhebel;
Fig. 7: einzelne Montageschritte des Messrohres in das Gehäuse als Querschnittdarstellung; und
Fig. 8: eine Ausgestaltung des austauschbaren Messrohres mit L-förmigen Messelektrodenkörpern.

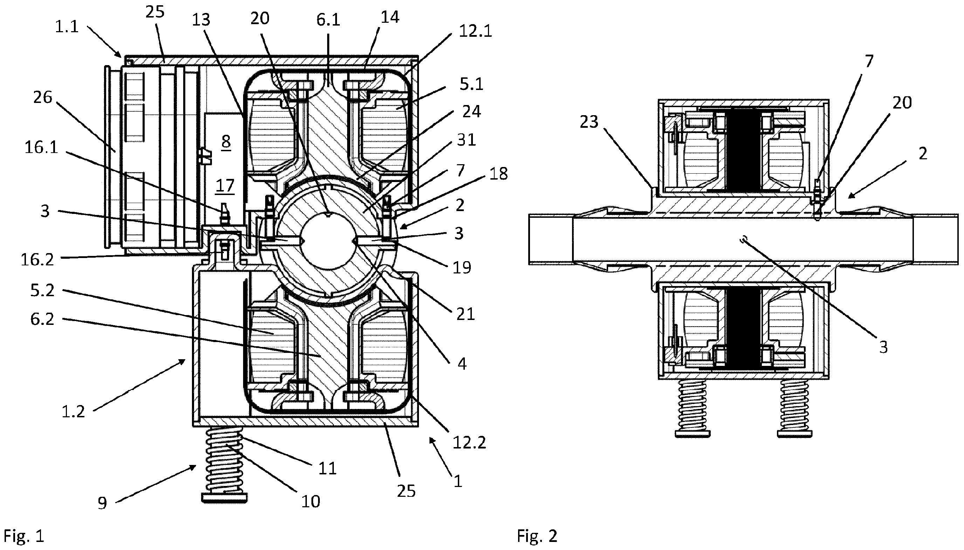

Der Aufbau und das Messprinzip eines magnetisch-induktiven Durchflussmessgerätes sind grundsätzlich bekannt. Die Fig. 1 zeigt eine Ausgestaltung des erfindungsgemäßen magnetisch-induktiven Durchflussmessgerätes. Durch ein austauschbares Messrohr 2 wird ein Medium geleitet, das eine elektrische Leitfähigkeit aufweist. Eine magnetfelderzeugende Vorrichtung ist so in einem Gehäuse 1 angeordnet, dass sich die Magnetfeldlinien im Wesentlichen senkrecht zu einer durch die Messrohrachse definierten Längsrichtung orientieren. Als magnetfelderzeugende Vorrichtung eignet sich vorzugsweise eine Sattelspule oder ein Polschuh 24 mit aufgesetzter Spulenanordnung 5 und Spulenkern 6. Bei angelegtem Magnetfeld entsteht im Messrohr 2 eine durchflussabhängige Potentialverteilung, die mit zwei an der Innenwand des Messrohres 2 gegenüberliegend, angebrachten Messelektroden 3 abgegriffen wird. In der Regel sind diese diametral angeordnet und bilden eine Elektrodenachse bzw. werden durch eine Querachse geschnitten, die senkrecht zu den Magnetfeldlinien und der Längsachse des Rohres verläuft. Anhand der abgegriffenen Messspannung U kann, unter Berücksichtigung der magnetischen Flussdichte, die Durchflussgeschwindigkeit u und, unter zusätzlicher Berücksichtigung der Rohrquerschnittsfläche, der Volumendurchfluss *V̇* des Mediums bestimmt werden. Ist die Mediumsdichte zusätzlich bekannt, kann auch der Massedurchfluss m überwacht werden. Um das Ableiten der an der ersten und zweiten Messelektrode 3 anliegenden Messspannung über das Rohr zu verhindern, wird die Innenwand mit einem isolierenden Material, beispielsweise einem Kunststoff-Liner ausgekleidet. Bei Messrohren aus isolierendem Material ist die Aufbringung einer isolierenden Beschichtung nicht notwendig. Eine Messschaltung 8 ist dazu eingerichtet die an den Messelektroden 3 anliegende Messspannung zu detektieren. Eine Auswerteschaltung ist dazu ausgebildet die Durchflussmesswerte des Mediums aus der detektierten Messspannung zu ermitteln. Die magnetfelderzeugende Vorrichtung wird über eine Betriebsschaltung 17 angesteuert. Handelsübliche magnetisch-induktive Durchflussmessgeräte weisen zusätzlich zu den Messelektroden zwei weitere Elektroden auf. Zum einen dient eine, optimalerweise am höchsten Punkt im Messrohr 2 angebrachte Füllstandsüberwachungselektrode dazu, eine Teilbefüllung des Messrohres zu detektieren, und ist dazu eingerichtet diese Information an den Nutzer weiterzuleiten und/oder den Füllstand bei der Ermittlung des Volumendurchflusses zu berücksichtigen. Des Weiteren dient eine Erdungselektrode 20, die in dieser Ausgestaltung an Stelle der Füllstandselektrode am obersten Punkt des Rohrquerschnittes angebracht ist, dazu eine ausreichende Erdung des Mediums zu gewährleisten. Dies ist insbesondere bei Messrohren 2 mit elektrisch isolierendem Messrohrkörper 31 notwendig.

Die magnetfelderzeugende Vorrichtung und die einzelnen Schaltungen 8, 17 sind in dem Gehäuse 1 untergebracht. Es ist jedoch auch möglich die einzelnen Schaltungen außerhalb des Gehäuses 1, beispielsweise in einem Leitsystem anzuordnen und die Verbindung über den Anschluss 26, der vorzugsweise als Steckverbinder ausgebildet ist, zu realisieren.

Üblicherweise erstrecken sich die Messelektroden 3 von dem Messrohrinneren ausgehend durch den Messrohrkörper 31 in das Gehäuseinnere, wo sie mit der Messschaltung 8 elektrisch verbunden sind. In dieser Ausgestaltung sind im Gehäuse 1 keine Messelektroden 3 angeordnet. Stattdessen weist das Gehäuse 1 Anschlusskontakte 7 auf, die dazu eingerichtet sind, die Messelektroden 3 des Messrohres 2 zu kontaktieren und so einen elektrischen Kontakt zwischen Messelektrode 3 und Messschaltung 8 zu schaffen. Die Anschlusskontakte 7 können federnd ausgebildet sein. Sie erstrecken sich durch die Gehäusewandung 25 eines der beiden Gehäuseteile 1.1, 1.2. Die Messelektroden weisen jeweils einen Frontbereich 4 auf, der das fließende Medium berührt. Der Frontbereich 4 kann Pilzkopf-, Spitzkopf-, Flachkopf-, Zylinder-, Kegel- oder Stift-förmig ausgebildet sein. Die Seitenflächen des Messelektrode erstrecken sich im Messrohrkörper 31 und weisen keinen Kontakt mit dem Medium auf. Des Weiteren ist der Messelektrodenkörper22 der jeweiligen Messelektroden 3 zweiteilig ausgebildet. Der erste Teil des Messelektrodenkörpers 22 weist den Frontbereich 4 auf und zusätzlich eine Aufnahme 19 für den zweiten Teil des Messelektrodenkörpers 22. Der zweite Teil des Messelektrodenkörpers 22 weist einen Frontbereich auf, der komplementär zur Aufnahme 19 ausgebildet ist, wodurch eine formschlüssige Verbindung realisiert wird. Der Endbereich des zweiten Teils des Messelektrodenkörpers 22 ist komplementär zum Anschlusskontakt 7 ausgebildet. Der zweite Teil des Messelektrodenkörpers 22 ist in einer Aufnahme des Messrohrkörpers 31 eingesetzt. Die beiden Gehäuseteile 1.1, 1.2 weisen jeweils mindestens eine Fläche 18 auf, die der Fläche des jeweils anderen Gehäuseteils zugewandt ist. Diese Fläche 18 berührt das Messrohr 2. Einer dieser beiden Flächen umfasst die Anschlusskontakte 7.

Erfindungsgemäß ist das Gehäuse 1 zweiteilig ausgebildet. Ein erstes Gehäuseteil 1.1 weist eine erste Spule 5.1 mit einem ersten Spulenkern 6.1 auf und ein zweites Gehäuseteil 1.2 weist eine zweite Spule 5.2 mit einem zweiten Spulenkern 6.2 auf. In dieser Ausgestaltung sind der Polschuh 24 und der Spulenkern 6 einstückig geformt. Der Polschuh 24 liegt auf der Innenseite der jeweiligen Gehäusewandung 25 auf. In beiden Gehäuseteilen ist jeweils eine Rückführungsanordnung 12 angeordnet. Die Rückführungsanordnung 12 umfasst zwei Rückführungskörper 12.1, 12.2, die jeweils aus einem einzelnen gebogenen Blechteil oder aus einem aus mehreren Lagen gebildeten, gebogenen Blechteil bestehen. Die Rückführungskörper 12.1, 12.2 sind jeweils u-förmig ausgebildet. Das heißt, sie weisen einen Bereich auf, der als Basis 14 geformt ist und zwei Bereiche die als Schenkel 13 gebildet sind. Die Basis 14 berührt die, dem Messrohr abgewandte Seite des Spulenkerns 6 und die Schenkel 13 erstrecken sich entlang der Spulenanordnung 5 in Richtung einer die beiden Messelektroden 3 schneidenden Längsebene. Die beiden Rückführungskörper 12.1, 12.2 sind jedoch nicht im Kontakt. Nicht in der Ausgestaltung dargestellt, jedoch auch beansprucht sind Öffnungen in den beiden Gehäuseteilen 1.1, 1.2, durch die sich zumindest einer der beiden Rückführungskörper 12.1, 12.2 erstreckt, wodurch im geschlossenen Zustand des Messsystems ein Kontakt zwischen den beiden Rückführungskörpern 12.1, 12.2 realisiert wird. Gemäß dieser Ausgestaltung lässt sich das zweite Gehäuseteil 1.2 so weit vom ersten Gehäuseteil 1.1 wegbewegen, dass das Messrohr in die Einbauposition eingeschoben und nicht durch die Rückführungsanordnung 12 behindert wird.

Die beiden Gehäuseteile 1.1, 1.2 sind über ein lineares Führungselement 9 miteinander verbunden. Das Führungselement 9 umfasst zwei Führungskörper 10 und jeweils eine Feder 11. Die Feder 11 ist eine zylindrische Schraubendruckfeder. Die beiden Führungskörper 10 sind zylinderförmige Rundschienen. Bewegt man das zweite Gehäuseteil 1.2 so wird die Feder 11 zusammengestaucht. Die Öffnung für das Messrohr 2, die durch die beiden Gehäuseteile 1.1, 1.2 gebildet werden ist zu klein für das Messrohr 2. Das zweite Gehäuseteil 1.2 muss entlang mittels des Führungselementes 9 bewegt werden, damit die Öffnung groß genug für das Messrohr 2 wird. Zusätzlich weist mindestens ein Gehäuseteil 1.1, 1.2 eine Frontfläche 21, die dermaßen geformt ist, dass ein Andrücken des Messrohres 2 an die Frontfläche 21 dazu führt, dass sich das zweite Gehäuseteil 1.2 entlang des Führungselementes 9 bewegt und das Messrohr 2 in die Einbauposition einführbar ist. Dafür weist die Fläche 18 ein Lot auf, das weder senkrecht noch parallel zur Längsachse des Führungselementes 9 verläuft, sondern zur Einbaurichtung des Messrohres 2 geneigt ist. Das zweite Gehäuseteil 1.2 wird somit durch das Andrücken des Messrohres 2 verdrängt und erst wenn die Öffnung groß genug ist, so dass das Messrohr 2 hindurchpasst, bewegt sich das zweite Gehäuseteil 1.2 zurück in Richtung der Ausgangslage. Somit wird eine form- und/oder kraftschlüssige Verbindung zwischen dem Gehäuse 1 und dem Messrohr 2 erreicht.

Beide Gehäuseteile 1.1, 1.2 weisen Steckverbindungen 16 auf, die komplementär zueinander ausgebildet sind. Dadurch wird eine elektrische Verbindung zwischen der Betriebsschaltung 17 und der im zweiten Gehäuseteil 1.2 angeordneten zweiten Spule 5.2 sichergestellt, ohne dass ein zusätzliches Kabel außerhalb der beiden Gehäuseteil 1.1, 1.2 verlaufen muss. Im geöffneten Zustand ist die Verbindung zwischen den beiden Steckverbindungen 16 offen und ein Versorgung der zweiten Spule 5.2 ist unterbrochen.

Die Fig. 2 zeigt einen Längsschnitt entlang des Messrohres 2. Im ersten Gehäuseteil 1.1 ist ein Anschlusskontakt 7 für die im Messrohr 2 angeordnete Erdungselektrode 20, die dazu eingerichtet ist ein kontrolliertes Potential im Medium zu gewährleisten. Der Anschlusskontakt 7 ist mit einem Referenzpotential, beispielsweise einem Erdpotential verbunden. Die Erdungselektrode 20 ist in Längsrichtung zur, die beiden Messelektroden 3 schneidenden Querschnittsebene des Messrohres 2 versetzt angeordnet.

Des Weiteren weist das Messrohr 2 zwei Führungsscheiben 23 auf, die jeweils zwei sich gegenüberliegende Seiten aufweisen, welche die Seitenflächen der beiden Gehäuseteile 1.1, 1.2 berühren. Dadurch wird ein passgenauer Einbau des Messrohres 2 realisiert.

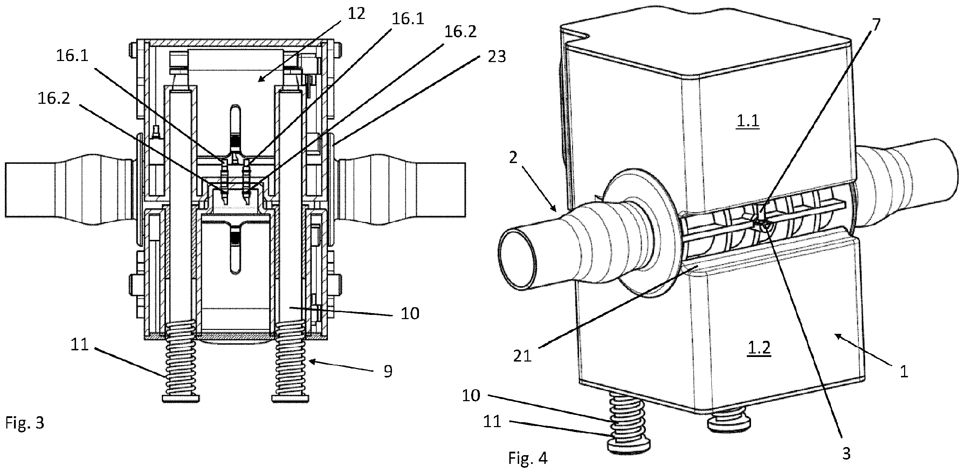

Die Fig. 3 zeigt einen Längsschnitt entlang des Gehäuses 1. Die beiden Führungskörper 10 erstrecken sich entlang einer Aufnahme in den beiden Gehäuseteilen 1.1, 1.2, wobei die Aufnahme im ersten Gehäuseteil 1.1 als Sackloch und die Aufnahme im zweiten Gehäuseteil 1.2 als Durchgangsloch ausgebildet. Das erste Gehäuseteil 1.1 sitzt auf den Führungskörpern 10, insbesondere auf den jeweiligen Frontflächen auf, wobei das zweite Gehäuseteil 1.2 entlang der Führungskörper 10 linear bewegbar ist. Des Weiteren weisen die beiden Führungselemente 9 jeweils eine Feder 11 auf. Diese ist dermaßen am Führungskörper 10 angebracht, dass ein Führen des zweiten Gehäuseteils 1.2 entlang des Führungskörpers 10 zu einer Stauchung der Feder 11 führt. Dafür weist der Führungskörper 10 im Endbereich eine Auflagefläche für die Feder 11 auf, dessen Querschnittsfläche größer ist als die Querschnittsfläche entlang der Bereiches, in dem die Feder 11 angeordnet ist. Wird das zweite Gehäuseteil 1.2 bewegt, so drückt entweder die Außenwandung des zweiten Gehäuseteils 1.2 oder ein zusätzlich in der Aufnahme für den Führungskörper angeordneter Stopper gegen die beiden Federn 11 und sorgt für die Stauchung der beiden Federn 11.

Die Fig. 4 zeigt eine perspektivische Ansicht auf eine Ausgestaltung des erfindungsgemäßen magnetisch-induktiven Durchflussmessgerätes mit dem Messrohr 2 im eingebauten Zustand. Das Messrohr lässt sich so weit in die durch die beiden Gehäuseteile 1.1, 1.2 gebildete Öffnung einführen, bis es gegen eine Frontfläche 21 stößt. Wird das Messrohr 2 weiter in Richtung senkrecht zur Längsachse der Führungskörpers 10 gedrückt, so wird die wirkende Kraft in eine Kraft parallel zur Längsachse des Führungskörpers 10 umgewandelt und das zweite Gehäuseteil 1.2 wird entlang des Führungskörpers 10 geführt. Wie viel Kraft notwendig ist um das zweite Gehäuseteil 1.2 zu bewegen hängt von der Federkonstante der jeweiligen Feder 11 ab.

In dieser Ausgestaltung ist die Messelektrode 3 einteilig ausgebildet und weist eine Aufnahme für den zugehörigen Anschlusskontakt 7 auf. Der Anschlusskontakt 7 ist federnd ausgebildet und lässt sich beim Einführen des Messrohres 2 im ersten Gehäuseteil 1.1 versenken.

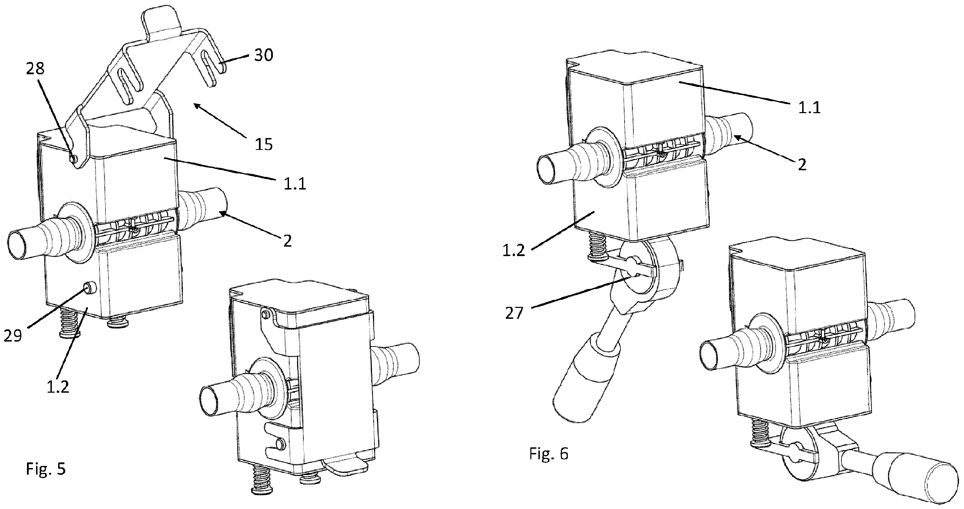

Die Fig. 5 eine perspektivische Ansicht auf eine weitere Ausgestaltung des erfindungsgemäßen magnetisch-induktiven Durchflussmessgerätes, welches ein Verschlusselement 15 aufweist. Das Verschlusselement 15 weist zwei Drehgelenke 28, einen Verschlussriegel 29 und eine Verschlussklappe 30 auf. Die Verschlussklappe 30 lässt sich um eine durch die Drehgelenke 28 definierte Rotationsachse bewegen. Im geschlossenen Zustand umgreift eine Ausformung in der Verschlussklappe 30 den Verschlussriegel 30. Ein Auseinanderziehen der beiden Gehäuseteile 1.1, 1.2 und somit ein Entnehmen des Messrohres 2 ist in dem Zustand nicht möglich.

Die Fig. 6 eine perspektivische Ansicht auf eine weitere Ausgestaltung des erfindungsgemäßen magnetisch-induktiven Durchflussmessgerätes, welches einen Exzenterhebel 27 aufweist. Ist das Messrohr 2 zwischen den beiden Gehäuseteilen 1.1, 1.2 angeordnet so sorgt eine Fixierung durch einen Exzenterhebel 27 für eine weitere Stabilisierung der Messanordnung. Die Fixierung erfolgt durch das umlegen des Exzenterhebels 27, der eine Rotationsachse aufweist, die versetzt zur Mittelachse ist. Dabei wird das zweite Gehäuseteil weiter in Richtung des ersten Gehäuseteils gedrückt und das Messrohr stärker fixiert. Diese Ausgestaltung ist besonders dann vorteilhaft, wenn das Messrohr 2 ausschließlich formschlüssig zwischen den beiden Gehäuseteilen 1.1, 1.2 angeordnet ist.

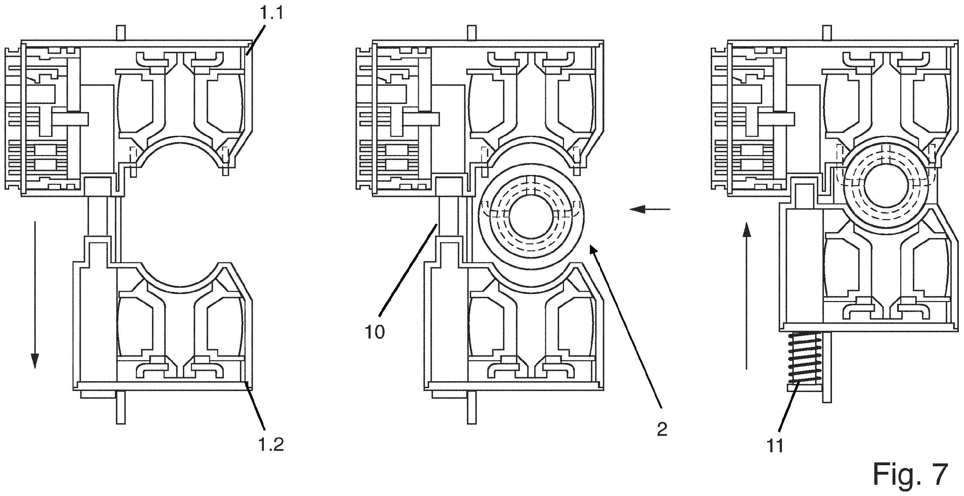

Die Fig. 7 zeigt drei einzelne Montageschritte des Messrohres 2 in die Öffnung zwischen den beiden Gehäuseteilen 1.1, 1.2 als Querschnittdarstellung. Im ersten Schritt wird das zweite Gehäuseteil 1.2 vom ersten Gehäuseteil 1.1 wegbewegt, in dem es entlang des linearen Führungskörpers 10 geführt wird. In dem ersten Schritt wird die Feder 11 gestaucht.

In zweiten Schritt wird das Messrohr 2 in die Öffnung geführt. Dabei deutet ein Pfeil die bevorzugte Einbaurichtung an. Die Form des Messrohrkörpers stellt sicher, dass die bevorzugte Einbaurichtung eingehalten wird und es zu keiner fehlerhaften Einbaulage, in der es keinen ausreichenden Kontakt zwischen den Messelektroden und den Anschlusskontakten gibt.

Im dritten Schritt wird die Feder wieder entlastet und das zweite Gehäuseteil 1.2 wird in seine Ausgangslage zurückgeführt. Dabei entsteht ein form- und/oder kraftschlüssige Verbindung zwischen dem Messrohr 2 und den beiden Gehäuseteilen 1.1, 1.2.

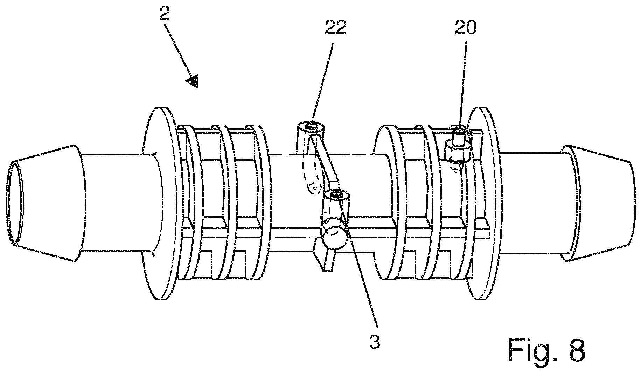

Die Fig. 8 zeigt eine weitere Ausgestaltung des austauschbaren Messrohres 2. Das Messrohr 2 weist zwei Messelektroden 3 auf, die jeweils einen L-förmigen Messelektrodenkörper22 aufweisen. Die Messelektrodenkörper 22 werden mittels eines Biegeverfahrens gebogen und werden in der Form mit in die Vergussform eingelegt mit dem Material des Messrohrkörpers umspritzt. Eine stiftförmige Erdungselektrode 20 ist versetzt zur Querachse angeordnet, in welcher die Messelektroden 3 liegen. Die Messelektroden 3 und die Erdungselektrode 20 weisen offenliegende Enden auf, die komplementär zu den Frontbereichen der Anschlusskontakten im Gehäuse (nicht abgebildet) geformt sind.

### Bezugszeichenliste

- 1: Gehäuse
- 1.1: erstes Gehäuseteil
- 1.2: zweites Gehäuseteil
- 2: Messrohr
- 3: Messelektrode
- 4: Frontbereich
- 5: Spulenanordnung
- 5.1: erste Spule
- 5.2: zweite Spule
- 6: Spulenkern
- 6.1: erster Spulenkern
- 6.2: zweiter Spulenkern
- 7: Anschlusskontakte
- 8: Messschaltung
- 9: Führungselement
- 10: Führungskörper
- 11: Feder
- 12: Rückführungsanordnung
- 12.1: erster Rückführkörper
- 12.2: zweiter Rückführkörper
- 13: Schenkel
- 14: Basis
- 15: Verschlusselement
- 16: Steckverbindung
- 16.1: erste Steckverbindung
- 16.2: zweite Steckverbindung
- 17: Betriebsschaltung
- 18: Fläche
- 19: Aufnahme
- 20: Erdungselektrode
- 21: Frontfläche
- 22: Messelektrodenkörper
- 23: Führungsscheibe
- 24: Polschuh
- 25: Wandung des Gehäuses
- 26: Anschluss
- 27: Exzenterhebel
- 28: Drehgelenk
- 29: Verschlussriegel
- 30: Verschlussklappe
- 31: Messrohrkörper

## Patentansprüche

1. Magnetisch-induktives Durchflussmessgerät, umfassend:
- ein Gehäuse (1);
- ein auswechselbares Messrohr (2) zum Führen eines fließfähigem Mediums;
- mindestens zwei Messelektroden (3), welche im Messrohr (2) angebracht sind,
wobei die Messelektroden (3) jeweils einen Frontbereich (4) aufweisen zum Bilden eines galvanischen Kontaktes mit dem Medium;
- eine magnetfelderzeugende Vorrichtung zum Erzeugen eines das Messrohr (2) durchsetzenden Magnetfeldes,
wobei die magnetfelderzeugende Vorrichtung eine erste Spule (5.1) und eine zweite Spule (5.2) umfasst,
wobei die erste Spule (5.1) einen ersten Spulenkern (6.1) umgreift,
wobei die zweite Spule (5.2) einen zweiten Spulenkern (6.2) umgreift;
- mindestens zwei Anschlusskontakte (7),
wobei die Anschlusskontakte (7) jeweils mit einer Messschaltung (8) elektrisch verbunden sind, welche bevorzugt im Gehäuse (1) angeordnet ist;
wobei das Gehäuse (1) zweiteilig ausgebildet ist und einen ersten Gehäuseteil (1.1) und einen zweiten Gehäuseteil (1.2) aufweist,
wobei die erste Spule (5.1) und der erste Spulenkern (6.1) im ersten Gehäuseteil (1.1) angeordnet sind,
wobei die zweite Spule (5.2) und der zweite Spulenkern (6.2) im zweiten Gehäuseteil (1.2) angeordnet sind,
wobei das Messrohr (2) zwischen dem ersten und zweiten Gehäuseteil (1.1, 1.2) form- und/oder kraftschlüssig angeordnet ist und
wobei der erste Gehäuseteil (1.2) und der zweite Gehäuseteil (1.2) über ein Führungselement (9) miteinander verbunden sind,
wobei der Abstand zwischen den beiden Gehäuseteilen (1.1, 1.2) über das Führungselement (9) linear verstellbar ist,
wobei die Gehäuseteile (1.1, 1.2) jeweils mindestens eine Fläche (18) aufweisen, die einer Fläche (18) des jeweilig anderen Gehäuseteils (1.1, 1.2) zugewandt ist,
**dadurch gekennzeichnet, dass** die Anschlusskontakte (7) an dieser Fläche (18) angeordnet sind und aus der Fläche hervorstehen,
wobei die Anschlusskontakte (7) federnd ausgebildet sind.

2. Durchflussmessgerät nach Anspruch 1,
wobei das Führungselement (9) aus mindestens einem insbesondere zumindest teilweise zylindrisch ausgebildeten Führungskörper (10) und einer Feder (11), insbesondere einer Schraubenfeder gebildet ist,
wobei die insbesondere als Zug- oder Druckfeder ausgebildete Feder (11) so am Führungskörper (10) angeordnet ist, dass die Feder (11) eines der beiden Gehäuseteile (1.1, 1.2) gegen das jeweils andere Gehäuseteil (1.1, 1.2) drückt oder beide Gehäuseteile (1.1, 1.2) zusammenzieht.

3. Durchflussmessgerät nach Anspruch 1 und/oder 2,
wobei ein erster Rückführkörper (12.1) im ersten Gehäuseteil (1.1) angeordnet ist,
wobei ein zweiter Rückführkörper (12.2) im zweiten Gehäuseteil (1.2) angeordnet ist,
wobei die Rückführkörper (12.1, 12.2) jeweils zwei Schenkel (13) und eine Basis (14) aufweisen,
wobei die Basis (14) den jeweiligen Spulenkern (6.1, 6.2) endseitig abdeckt,
wobei die Schenkel (13) sich seitlich der jeweiligen Spule (5.1, 5.2) erstrecken und zum Messrohr (2) geneigt sind.

4. Durchflussmessgerät nach einem der vorhergehenden Ansprüche,
wobei ein insbesondere am Gehäuse angebrachtes Verschlusselement (15) dazu ausgebildet ist, den ersten Rückführkörper (12.1) mit dem zweiten Rückführkörper (12.2) zu verbinden,
wobei das Verschlusselement (15) als schwenkbare Klappe oder als linear verschiebbares Blechteil realisiert ist.

5. Durchflussmessgerät nach einem der vorhergehenden Ansprüche,
wobei im ersten Gehäuseteil (1.1) eine erste Steckverbindung (16.1) angeordnet ist, die mit einer Betriebsschaltung (17) elektrisch verbunden ist,
wobei im zweiten Gehäuseteil (1.2) eine zweite Steckverbindung (16.2) angeordnet ist, die komplementär zur ersten Steckverbindung (16.1) ausgebildet ist und die mit der zweiten Spule (6.2) elektrisch verbunden ist
wobei in einem geschlossenen Zustand des magnetisch-induktiven Durchflussmessgerätes eine elektrische Verbindung zwischen dem ersten und dem zweiten Steckverbinder (16.1, 16.2) hergestellt ist.

6. Durchflussmessgerät nach einem der vorherigen Ansprüche,
wobei die Messelektroden (3) auf gegenüberliegenden Seiten des Messrohres (2) angeordnet sind,
wobei die Messelektroden (3) stiftförmig ausgebildet sind und eine Vertiefung an jeweiligen Enden aufweisen, die als Aufnahme (19) für die Anschlusskontakte (7) ausgebildet sind.

7. Durchflussmessgerät nach einem der vorherigen Ansprüche,
wobei die Messelektroden (3) in einer Querschnittsebene des Messrohres (2) angebracht sind,
wobei eine Erdungselektrode (20) zum Bilden eines galvanischen Kontaktes mit dem Medium zur Querschnittsebene beabstanden im Messrohr (2) angebracht ist,
wobei ein Anschlusskontakt (7), der dazu ausgebildet ist die Erdungselektrode (20) mit einem Referenzpotential, insbesondere mit einem Erdpotential elektrisch zu verbinden, im ersten oder im zweiten Gehäuseteil (1.1, 1.2) angeordnet ist.

8. Durchflussmessgerät nach einem der vorherigen Ansprüche,
wobei mindestens ein Gehäuseteil (1.1, 1.2) eine Frontfläche (21) aufweist,
wobei ein Normalenvektor der Frontfläche (21) aus einem Vektor parallel zur Längsachse des Führungselementes (9) und einem Vektor parallel zu einer zwei Messelektroden (3) verbindenden Querachse des Messrohres (2) zusammengesetzt ist,
wobei die Frontfläche (21) dazu ausgebildet ist beim Einführen des Messrohres (2) Kraft, die dabei auf die Frontfläche (21) wirkt, in eine Linearbewegung eines Gehäuseteils (1.1, 1.2) weg vom jeweils anderen Gehäuseteil (1.1, 1.2) umzuformen.

9. Durchflussmessgerät nach einem der vorherigen Ansprüche,
wobei die Messelektroden (3) jeweils einen insbesondere L-förmig ausgebildeten Messelektrodenkörper (22) aufweisen.

10. Durchflussmessgerät nach Anspruch 9,
wobei der Messelektrodenkörper (22) aus zwei Teilen gebildet ist,
wobei ein Endbereich des ersten Teils komplementär zum Frontbereich des zweiten Teils gebildet ist,
wobei der zweite Teil formschlüssig mit dem ersten Teil verbunden ist.

11. Durchflussmessgerät nach einem der Ansprüche 1 bis 9,
wobei das Messrohr (2) mindestens zwei Führungsscheiben (23) aufweist die als Positioniervorrichtung dienen,
wobei die Führungsscheiben (23) jeweils eine Kontaktfläche aufweisen,
wobei die Führungsscheiben (23) so ans Messrohr (2) angebracht sind, dass die Kontaktflächen einander zugewandt sind,
wobei die Führungsscheiben (23) beabstanden sind und die Kontaktflächen im Kontakt mit dem Gehäuse (2) stehen.

12. Durchflussmessgerät nach einem der Ansprüche 1 bis 9,
wobei die magnetfelderzeugende Vorrichtung, insbesondere Polschuhe (24) der magnetfelderzeugende Vorrichtung durch eine Wandung (25) des Gehäuses (1) von dem Messrohr (2) getrennt ist.

13. Durchflussmessgerät nach einem der vorherigen Ansprüche,
wobei das erste und das zweite Gehäuseteil (1.1, 1.2) jeweils eine Öffnung aufweisen,
wobei sich ein Schenkel des ersten und/oder des zweiten Rückführkörpers (12.1, 12.2) durch die jeweilige Öffnung erstrecken,
wobei sich in einem geschlossenen Zustand des magnetisch-induktiven Durchflussmessgerätes ein Kontakt zwischen dem ersten und dem zweiten Rückführkörper (12.1, 12.2) ergibt.

14. Durchflussmessgerät nach einem der vorherigen Ansprüche,
wobei das Messrohr (2) aus einem isolierenden Werkstoff, insbesondere einem Kunststoff und bevorzugt Polyetheretherketone (PEEK), Polyaryletherketone (PAEK), Polyphenylsulfone (PPSU), Polyethersulfone (PESU), Polysulfone (PSU), Polyarylamide (PARA), Glas und/oder Keramik gefertigt ist.

## Claims

1. Magnetic-inductive flow meter, comprising:
- a housing (1);
- an exchangeable measuring tube (2) for guiding a flowable medium;
- at least two measuring electrodes (3), which are mounted in the measuring tube (2),
wherein the measuring electrodes (3) each have a front region (4) for forming a galvanic contact with the medium;
- a magnetic field-generating device for generating a magnetic field which is applied to the measuring tube (2)
magnetic field,
wherein the magnetic field generating device comprises a first coil (5.1) and a second coil (5.2),
wherein the first bobbin (5.1) embraces a first bobbin core (6.1), wherein
the second bobbin (5.2) embraces a second bobbin core (6.2);
- at least two connection contacts (7),
wherein the connection contacts (7) are each electrically connected to a measuring circuit (8), which is preferably arranged in the housing (1);
wherein the housing (1) is formed in two parts and has a first housing part (1.1) and a second housing part (1.2),
wherein the first coil (5.1) and the first coil core (6.1) are arranged in the first housing part (1.1),
wherein the second coil (5.2) and the second coil core (6.2) are arranged in the second housing part (1.2),
wherein the measuring tube (2) is located between the first and second housing parts (1.1, 1.2) is arranged positively and/or non-positively and
wherein the first housing part (1.2) and the second housing part (1.2) are connected to one another via a guide element (9),
whereby the distance between the two housing parts (1.1, 1.2) can be adjusted linearly via the guide element (9),
wherein the housing parts (1.1, 1.2) each have at least one surface (18) which faces a surface (18) of the respective other housing part (1.1, 1.2),
**characterized in that** the connection contacts (7) are arranged on this surface (18) and protrude from the surface,
wherein the connection contacts (7) are resilient.

2. Flow meter according to claim 1,
wherein the guide element (9) consists of at least one guide body (10), which is in particular at least partially cylindrical, and a spring (11),
in particular a helical spring,
wherein the spring (11), which is designed in particular as a tension or compression spring, is arranged on the guide body (10) in such a way that the spring (11) presses one of the two housing parts (1.1, 1.2) against the respective other housing part (1.1, 1.2) or presses both housing parts against each other.
(1.1, 1.2) together.

3. Flowmeter according to claim 1 and/or 2,
wherein a first feedback body (12.1) is arranged in the first housing part (1.1),
wherein a second feedback body (12.2) is arranged in the second housing part (1.2) is,
wherein the return bodies (12.1, 12.2) each have two legs (13) and a base (14),
whereby the base (14) covers the end of the respective coil core (6.1, 6.2),
wherein the legs (13) extend to the side of the respective coil (5.1, 5.2) and are inclined towards the measuring tube (2).

4. A flowmeter according to any one of the preceding claims,
wherein a closure element (15) attached in particular to the housing is designed to connect the first return body (12.1) to the second return body (12.2),
wherein the closure element (15) is realized as a pivotable flap or as a linearly displaceable sheet metal part.

5. A flowmeter according to any one of the preceding claims,
wherein a first plug connection (16.1), which is electrically connected to an operating circuit (17), is arranged in the first housing part (1.1),
wherein a second plug connection (16.2) is arranged in the second housing part (1.2), which is designed to complement the first plug connection (16.1) and which is electrically connected to the second coil (6.2)
wherein an electrical connection is established between the first and the second plug connector (16.1, 16.2) in a closed state of the electromagnetic flowmeter.

6. A flowmeter according to any one of the preceding claims,
wherein the measuring electrodes (3) are arranged on opposite sides of the measuring tube (2),
wherein the measuring electrodes (3) are pin-shaped and have a recess at each end, which is designed as a receptacle (19) for the connection contacts (7).

7. A flowmeter according to any one of the preceding claims,
wherein the measuring electrodes (3) are mounted in a cross-sectional plane of the measuring tube (2),
wherein an earthing electrode (20) for forming a galvanic contact with is mounted in the measuring tube (2) at a distance from the medium to the cross-sectional plane,
wherein a connecting contact (7), which is designed to connect the earthing electrode (20) to be electrically connected to a reference potential, in particular to an earth potential, is arranged in the first or second housing part (1.1, 1.2).

8. A flowmeter according to any one of the preceding claims,
wherein at least one housing part (1.1, 1.2) has a front surface (21),
wherein a normal vector of the front surface (21) consists of a vector parallel to the longitudinal axis of the guide element (9) and a vector parallel to a two-directional axis of the guide element (9).
measuring electrodes (3) connecting the transverse axis of the measuring tube (2),
wherein the front surface (21) is designed for this purpose when inserting the measuring tube (2) force, which acts on the front surface (21), into a linear movement of one housing part (1.1, 1.2) away from the other housing part (1.1, 1.2).

9. Flow meter according to any of the preceding claims,
wherein the measuring electrodes (3) each have a measuring electrode body (22) which is in particular L-shaped.

10. Flow meter according to claim 9,
wherein the measuring electrode body (22) is formed from two parts,
wherein an end region of the first part is formed complementary to the front region of the second part,
whereby the second part is positively connected to the first part.

11. Flowmeter according to any one of claims 1 to 9,
wherein the measuring tube (2) has at least two guide disks (23) which serve as a positioning device,
wherein the guide disks (23) each have a contact surface,
wherein the guide disks (23) are attached to the measuring tube (2) in such a way that the contact surfaces are facing each other,
whereby the guide disks (23) are spaced apart and the contact surfaces are in contact with the housing (2).

12. The flowmeter according to any one of claims 1 to 9,
wherein the magnetic field generating device, in particular pole pieces (24) of the magnetic field generating device, is separated from the measuring tube (2) by a wall (25) of the housing (1).

13. A flowmeter according to any one of the preceding claims,
wherein the first and second housing parts (1.1, 1.2) each have an opening,
wherein one leg of the first and/or the second return body (12.1, 12.2) through the respective opening,
whereby in a closed state of the electromagnetic flowmeter there is contact between the first and second feedback bodies (12.1, 12.2).

14. Flow meter according to any of the preceding claims,
wherein the measuring tube (2) is made of an insulating material, in particular a plastic and preferably polyetheretherketone (PEEK), polyaryletherketone (PAEK), polyphenylsulfone (PPSU), polyethersulfone (PESU), polysulfone (PSU), polyarylamide (PARA), glass and/or ceramic.

## Revendications

1. Débitmètre magnéto-inductif comprenant :
- un boîtier (1) ;
- un tube de mesure interchangeable (2) pour le guidage d'un milieu fluide ;
- au moins deux électrodes de mesure (3) montées dans le tube de mesure (2),
dans lequel les électrodes de mesure (3) présentent chacune une zone frontale (4) pour former un contact galvanique avec le milieu ;
- un dispositif de génération de champ magnétique pour générer un champ magnétique autour du tube de mesure (2).
champ magnétique traversant,
dans lequel le dispositif de génération de champ magnétique comprend une première bobine (5.1) et une seconde bobine (5.2),
la première bobine (5.1) entourant un premier noyau de bobine (6.1), la
deuxième bobine (5.2) entourant un deuxième noyau de bobine (6.2) ;
- au moins deux contacts de connexion (7),
les contacts de connexion (7) étant respectivement reliés électriquement à un circuit de mesure (8), qui est de préférence disposé dans le boîtier (1) ;
le boîtier (1) étant réalisé en deux parties et présentant une première partie de boîtier (1.1) et une deuxième partie de boîtier (1.2),
la première bobine (5.1) et le premier noyau de bobine (6.1) étant disposés dans la première partie de boîtier (1.1),
la deuxième bobine (5.2) et le deuxième noyau de bobine (6.2) étant disposés dans la deuxième partie de boîtier (1.2),
le tube de mesure (2) étant placé entre la première et la deuxième partie de boîtier (1.1, 1.2)
est disposé par complémentarité de forme et/ou de force et
la première partie de boîtier (1.2) et la deuxième partie de boîtier (1.2) étant reliées entre elles par un élément de guidage (9),
la distance entre les deux parties de boîtier (1.1, 1.2) étant réglable de manière linéaire par l'intermédiaire de l'élément de guidage (9),
les parties de boîtier (1.1, 1.2) présentant chacune au moins une surface (18) qui est tournée vers une surface (18) de l'autre partie de boîtier (1.1, 1.2) respective,
**caractérisé en ce que** les contacts de connexion (7) sont disposés sur ladite surface (18) et dépassent de ladite surface,
les contacts de raccordement (7) étant réalisés de manière élastique.

2. Débitmètre selon la revendication 1,
l'élément de guidage (9) étant constitué d'au moins un corps de guidage (10), en particulier de forme au moins partiellement cylindrique, et d'un ressort (11),
en particulier d'un ressort hélicoïdal,
le ressort (11), réalisé en particulier sous forme de ressort de traction ou de compression, étant disposé sur le corps de guidage (10) de telle sorte que le ressort (11) presse l'une des deux parties de boîtier (1.1, 1.2) contre l'autre partie de boîtier respective (1.1, 1.2) ou presse les deux parties de boîtier (1.1, 1.2) contre le corps de guidage (10). (1.1, 1.2) se contracte.

3. Débitmètre selon la revendication 1 et/ou 2,
un premier corps de retour (12.1) étant disposé dans la première partie de boîtier (1.1),
un deuxième corps de retour (12.2) étant disposé dans la deuxième partie du boîtier (1.2) est
les corps de retour (12.1, 12.2) ayant chacun deux branches (13) et une base (14),
la base (14) recouvrant l'extrémité du noyau de bobine respectif (6.1, 6.2),
les branches (13) s'étendant latéralement à la bobine respective (5.1, 5.2) et étant inclinées par rapport au tube de mesure (2).

4. Débitmètre selon l'une des revendications précédentes,
un élément de fermeture (15), monté en particulier sur le boîtier, étant conçu pour relier le premier corps de retour (12.1) au deuxième corps de retour (12.2),
l'élément de fermeture (15) étant réalisé sous la forme d'un volet pivotant ou d'une pièce en tôle pouvant être déplacée linéairement.

5. Débitmètre selon l'une des revendications précédentes,
une première connexion enfichable (16.1), qui est reliée électriquement à un circuit de fonctionnement (17), étant disposée dans la première partie de boîtier (1.1),
une deuxième connexion enfichable (16.2) étant disposée dans la deuxième partie de boîtier (1.2), laquelle est conçue de manière complémentaire à la première connexion enfichable (16.1) et est reliée électriquement à la deuxième bobine (6.2)
dans lequel, dans un état fermé du débitmètre électromagnétique, une liaison électrique est établie entre le premier et le deuxième connecteur (16.1 , 16.2).

6. Débitmètre selon l'une des revendications précédentes,
les électrodes de mesure (3) étant disposées sur des côtés opposés du tube de mesure (2),
les électrodes de mesure (3) étant réalisées en forme de broche et présentant un renfoncement à des extrémités respectives qui sont réalisées sous forme de logement (19) pour les contacts de connexion (7).

7. Débitmètre selon l'une des revendications précédentes,
les électrodes de mesure (3) étant montées dans un plan de section transversale du tube de mesure (2),
dans lequel une électrode de mise à la terre (20) pour former un contact galvanique avec
Le tube de mesure (2) est placé à une certaine distance du milieu par rapport au plan de la section,
dans lequel un contact de connexion (7), qui est adapté pour connecter l'électrode de mise à la terre à la borne de connexion (7), est connecté à la borne de connexion (7).
(20) à un potentiel de référence, en particulier à un potentiel de terre, est disposée dans la première ou dans la deuxième partie de boîtier (1.1, 1.2).

8. Débitmètre selon l'une des revendications précédentes,
au moins une partie de boîtier (1.1, 1.2) présentant une surface frontale (21),
dans lequel un vecteur normal de la surface frontale (21) est constitué d'un vecteur parallèle à l'axe longitudinal de l'élément de guidage (9) et d'un vecteur parallèle à un axe de deux directions.
(3) du tube de mesure (2),
la surface frontale (21) étant conçue pour, lors de l'introduction du tube de mesure (2), qui agit alors sur la surface frontale (21), en un mouvement linéaire d'une partie de boîtier (1.1, 1.2) s'éloignant de l'autre partie de boîtier (1.1, 1.2) respective.

9. Débitmètre selon l'une des revendications précédentes,
les électrodes de mesure (3) présentant chacune un corps d'électrode de mesure (22) réalisé en particulier en forme de L.

10. Débitmètre selon la revendication 9,
le corps de l'électrode de mesure (22) étant formé de deux parties,
dans lequel une partie d'extrémité de la première partie est formée de manière complémentaire à la partie avant de la seconde partie,
la deuxième partie étant reliée par complémentarité de forme à la première partie.

11. Débitmètre selon l'une quelconque des revendications 1 à 9,
le tube de mesure (2) présentant au moins deux disques de guidage (23) qui servent de dispositif de positionnement,
les disques de guidage (23) présentant chacun une surface de contact,
les rondelles de guidage (23) étant montées sur le tube de mesure (2) de telle sorte que les
Les surfaces de contact sont tournées l'une vers l'autre,
dans lequel les disques de guidage (23) sont espacés et les surfaces de contact sont en contact avec le boîtier (2).

12. Débitmètre selon l'une quelconque des revendications 1 à 9,
dans lequel le dispositif de génération de champ magnétique, en particulier les pièces polaires (24) du dispositif de génération de champ magnétique, est séparé du tube de mesure (2) par une paroi (25) du boîtier (1).

13. Débitmètre selon l'une des revendications précédentes,
la première et la deuxième partie de boîtier (1.1, 1.2) présentant chacune une ouverture,
une branche du premier et/ou du deuxième corps de retour (12.1, 12.2) s'étendent à travers l'ouverture correspondante,
dans lequel, dans un état fermé du débitmètre électromagnétique, il se produit un contact entre le premier et le deuxième corps de rétroaction (12.1, 12.2).

14. Débitmètre selon l'une quelconque des revendications précédentes,
le tube de mesure (2) étant fabriqué en un matériau isolant, en particulier en une matière plastique et de préférence en polyétheréthercétones (PEEK), polyaryléthercétones (PAEK), polyphénylsulfones (PPSU), polyéthersulfones (PESU), polysulfones (PSU), polyarylamides (PARA), verre et/ou céramique.
